# NEW EUROPEAN PATENT SPECIFICATION

(11) **EP 2 522 479 B2**
(45) Date of publication and mention of the opposition decision: **26.02.2025**
(45) Mention of the grant of the patent: 31.10.2018
(21) Application number: 11165243.4
(22) Date of filing: 09.05.2011
(51) Int. Cl.: B29B 11/14, B29C 49/42, B29C 49/78, B65D 1/02, B29B 11/08

(54) **Plastic prefom or container with a recessed orientation slot, process of manufacturing a rigid container, process for angularly orienting a preform and process of detecting the orientation of a preform**
Kunststoffvorformling oder Behälter mit ausgespartem Ausrichtungsschlitz, Verfahren zur Herstellung eines Behälters, Verfahren zur Orientierung eines Vorformlings und Verfahren zur Erkennung der Ausrichtung eines Vorformlings
Préforme ou récipient en plastique doté d'une rainure d'orientation, procédé pour la fabrication d'un récipient, procédé pour orienter angulairement une préforme et procédé de détection de l'orientation d'une préforme

(43) Date of publication of application: 14.11.2012
(73) Proprietor: Plastipak BAWT S.à.r.l., 4940 Bascharage (LU)
(72) Inventor: Van Dijck, Sam, 2320 Hoogstraten (BE); Balemans, Franciscus, 2900 Schoten (BE)
(74) Representative: V.O.

(56) References cited:
- EP-A1- 1 279 477
- EP-A1- 2 316 630
- EP-A1- 2 439 490
- EP-A2- 2 439 033
- EP-A2- 2 439 034
- WO-A1-2004/007291
- FR-A1- 2 736 299
- FR-A1- 2 736 299
- FR-A1- 2 874 193
- FR-A1- 2 937 309
- US-A1- 2006 060 554
- US-A1- 2006 060 554

## Description

### Technical field

The invention relates to the field of plastic preforms that are suitable for subsequent blow-molding in order to form rigid plastic container, and to blow molded plastic containers obtained from said preforms. In this field, the invention relates mainly to the angular orientation of the preform or container around its longitudinal axis. More particularly, but not exclusively, in a preferred embodiment the invention also relates to the field of plastic containers obtained by isobaric blowing preforms in a mold.

### Prior art

A well-known technique for manufacturing a thermoplastic container is the so-called injection stretch-blow molding technique, wherein (first step) a thermoplastic material is injected in a mold in order to form a preform (semi-finished product), and subsequently (second step) said preform is biaxially stretched in a mold in order to form a rigid hollow container of any kind of shapes and sizes, like for example a bottle-shaped container, a jar, etc.... US-A-2006/060554 discloses a prior art according to the preamble of claim1.

Typically, a preform comprises a neck finish, a closed bottom end, and a main tubular body extending between said closed bottom end and said neck finish. Said neck finish comprises a cylindrical wall terminated by a top opening and an outer neck support ring surrounding the cylindrical wall. When the preform is blow molded in a mold, the neck finish is used for maintaining the preform in the blowing mold, and is thus not stretched. The main tubular body is biaxially stretched (in a longitudinal direction and in a radial direction) in order to form a container body of predefined shape. The preform closed bottom end is also biaxially stretched, but with a high radial stretch ratio and a low longitudinal stretch ratio, in order to form typically the bottom base of the final blow-molded container.

Depending of the injection step, the preform body and the preform closed bottom end can have a monolayer structure or a multilayer structure (for example if a co-injection and/or sequential injection step is performed).

There is a wide variety of thermoplastic materials that can be processed by injection molding for making a preform. By way of example only, the most common and widely used thermoplastic materials are polyester material, in particular homo or copolymer of PET (polyethylene terephtalate).

In a so-called "one stage process", the second step (stretch-blow molding) is performed in line immediately after the first step (preform injection). In a so-called "two stages process", the second step (stretch-blow molding) is postponed, and a reheating of the preform is performed prior to the stretch-blow molding operation.

In a first well-known stretch-blow molding process, the top opening of the neck finish is hermetically closed, and a stretching rod is introduced inside the preheated preform and is used for axial stretching and used to introduce blowing air under pressure inside the preform in order to biaxially stretch the preform in a mold and to form a rigid plastic container. In such a well-known blowing process, the pressure inside the preform is high and such high pressure can lead to a deformation of the neck finish.

In order to reduce the risk of deformation of the neck finish, especially for preforms with a thin wall neck finish, a second well-known blowing process, called therein "isobaric process" or "isobaric blowing", is preferred. In the so-called isobaric process, the top opening of the preform is not hermetically closed but a blowing nozzle head is adapted onto the preform neck finish in such a way to close the preform by making a seal between the blowing nozzle head and the top side of the preform neck support ring.

In many production processes, there is a need to arrange preforms at a predetermined angular orientation around their longitudinal axis, for example prior to the introduction of the preforms in the blow mold, in order to obtain at the end a predetermined an accurate angular orientation of the neck finish in connection with the container body. This angular orientation is more particularly useful for particular types of containers adapted to be closed with a closure device that needs to be in a precise angular position, such as for example a dispenser nozzle or a sprayer nozzle or an asymmetric cap or the like that is not shaped as a solid of revolution.

There is also a need to arrange blow moulded containers at a predetermined angular orientation around their longitudinal axis in some production processes, for example in processes for applying labels or printing letters and/or logos on asymmetric containers.

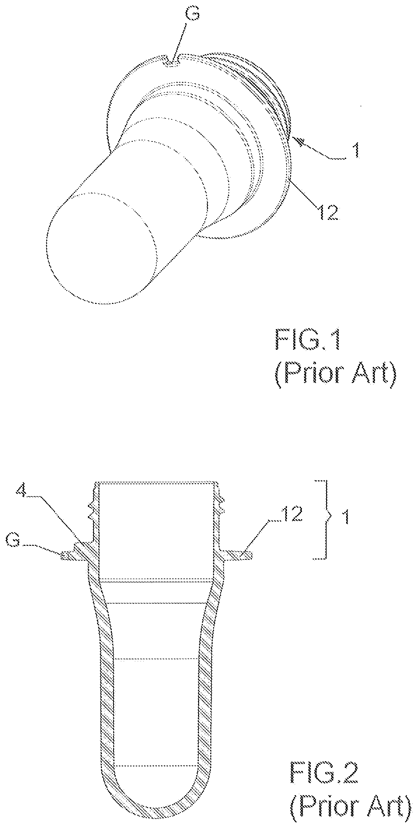

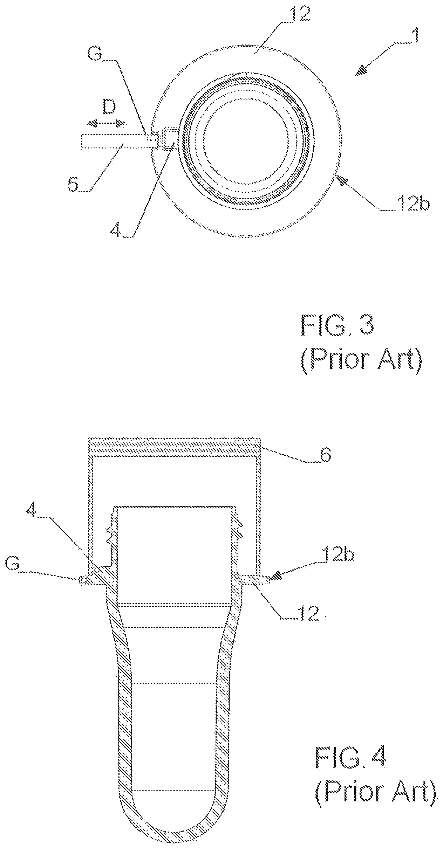

In reference to figures 1 to 3, a well-known solution for achieving this angular orientation of a preform or container is to make a radial groove G in the edge of the neck support ring 12 of the neck finish 1 of the preform. In reference to figure 3, the correct angular orientation of the preform (or container) is knowingly obtained for example during the handling of the preform (or container) by making this groove G cooperate with a movable radial retractable cam 5 or the like. Said cam 5 is for example actuated in the radial direction by a jack or an elastic spring. In another variant, the preform (or container) can be rotated around its longitudinal axis until the groove G is being detected by sensors.

This orientation groove G requires an increase of the diameter of the neck support ring 12. A preform having a neck support ring of higher diameter involves the following drawbacks: the preform is more difficult to inject ; the cooling time of the neck finish is increased and thereby the injection cycle time is detrimentally increased ; the number of cavities in the injection tool is reduced.

Additionally, when the preforms comprise on the top side of the neck support ring a stop ledge 4, for example that is adapted to cooperate with a closure cap or a dispensing nozzle or spraying nozzle, and that is radially aligned with the groove G as depicted on figure 3, this increase of the neck support ring diameter is even more important, which aggravates the aforesaid drawbacks.

Additionally, when an annular top seal has to be provided on the top side of the neck support ring preform, for example (but not only) for enabling the preform to be blown in an isobaric process, the increase of diameter of the neck support ring diameter is also more important, which also aggravates the aforesaid drawbacks.

### Objective of the invention

A main objective of the invention is to propose a novel solution for the angular orientation of plastic preforms or containers having a neck support ring, which solution avoids the aforesaid drawbacks.

### Summary of the invention

This objective is achieved by the plastic preform or container of claim 1.

The wording "recessed slot" used therein means that the slot made in the bottom side of the neck support ring is not breaking through the neck support ring, i.e. does not reach the top side of the neck support ring.

### Brief description of the drawings

The technical characteristics and advantages of the invention will appear more clearly on reading the following detailed description which is made by way of non-exhaustive and non-limiting examples, and with reference to the appended drawings, as follows:
- Figure 1 is a view in perspective of a plastic preform of the prior art.
- Figure 2 is a view in longitudinal cross section of the preform of figure 1.
- Figure 3 is a top view of the preform of figure 1 showing an orientation cam inserted into the groove of the preform.
- Figure 4 is a view in longitudinal cross section of an isobaric blowing nozzle adapted onto the preform of figure 1.(without stretch rod)
- Figure 5 is a top view of the isobaric blowing nozzle and preform of figure 4.
- Figure 6 shows a plastic preform according to a particular embodiment of the invention.
- Figure 7 is a view in perspective of the plastic preform of figure 6 showing the bottom side of the neck support ring.
- Figure 8 is a view in longitudinal cross section showing an orientation cam inserted into the recessed orientation slot of the preform of figure 6 or 7.
- Figure 9 is a top view of the preform and orientation cam of figure 8.
- Figure 10 is a view in longitudinal cross section of an isobaric blowing nozzle adapted onto the preform of figure 6 or 7.
- Figure 11 is a top view of the isobaric blowing nozzle and preform of figure 10.
- Figure 12 is a view in longitudinal cross section of a container obtained by blow moulding the preform of figure 6 or 7.
- Figure 13 is a top view of the container of figure 12.

### Detailed description

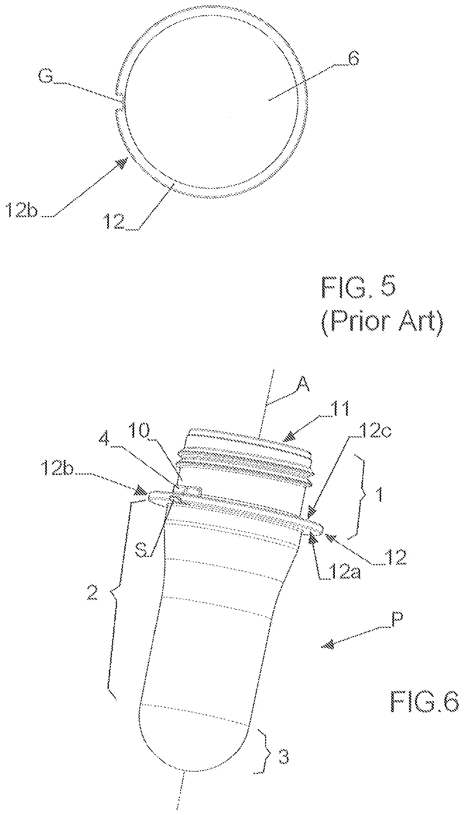

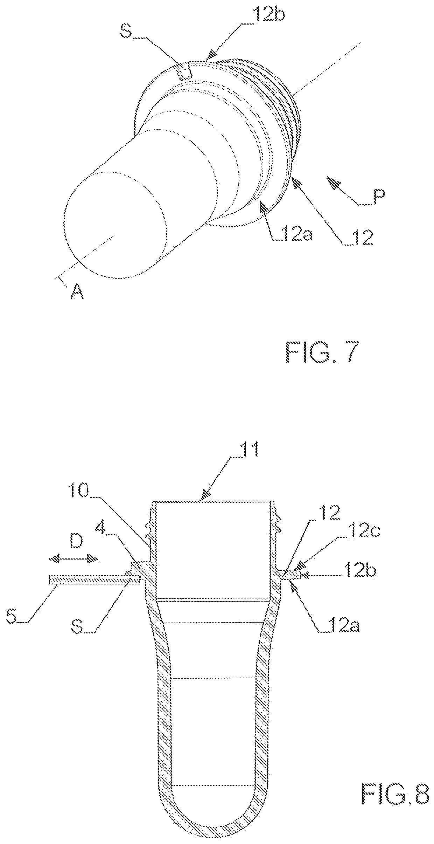

In reference to the particular embodiment of figures 6 and 7, the plastic preform P has a major longitudinal axis A, and includes a neck finish 1, a closed bottom end 3 and a main tubular body 2 extending between said closed bottom end 3 and said neck finish 1. The neck finish 1 includes a cylindrical wall 10 terminated by a top opening 11, and a neck support ring 12 in the lower part of the cylindrical wall 10.

According to a first characteristic of the invention, the bottom side 12a of the neck support ring 12 comprises a recessed orientation slot S that extends radially from the neck support ring outer edge 12b.

According to another characteristic of the invention, the preform P also comprises a stop ledge 4 on the top side 12c of the neck support ring 12. This stop ledge 4 is adapted to knowingly form an abutment for achieving a correct angular orientation of a closure device or a spraying nozzle or a dispensing nozzle (not shown) mounted on the neck finish 1.

This preform P is manufactured by the well-known technique of injection molding. Within the scope of the invention, this preform P can be a monolayer preform or a multilayer preform. This preform P can be made of any known thermoplastic polymer that can be processed by injection molding in order to form a preform. Polyester polymers, and in particular homo or copolymer of PET, are the most commonly used, but the invention is however not limited to these particular polymers.

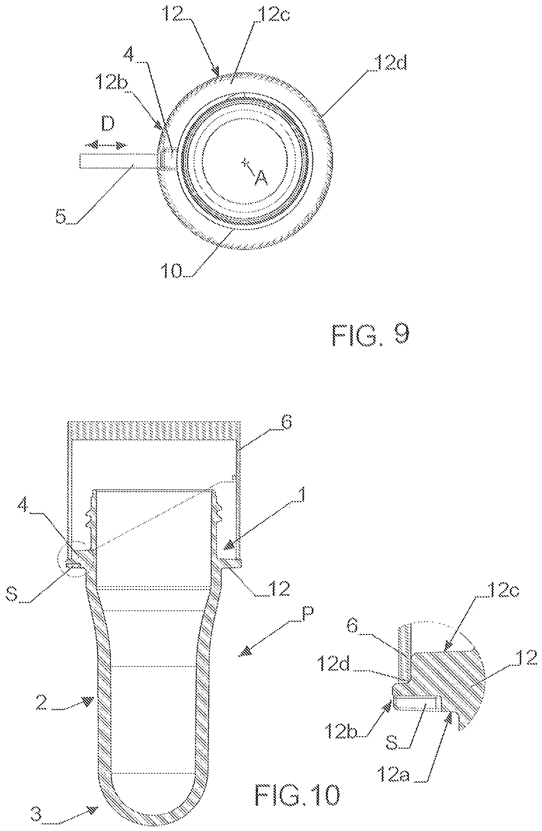

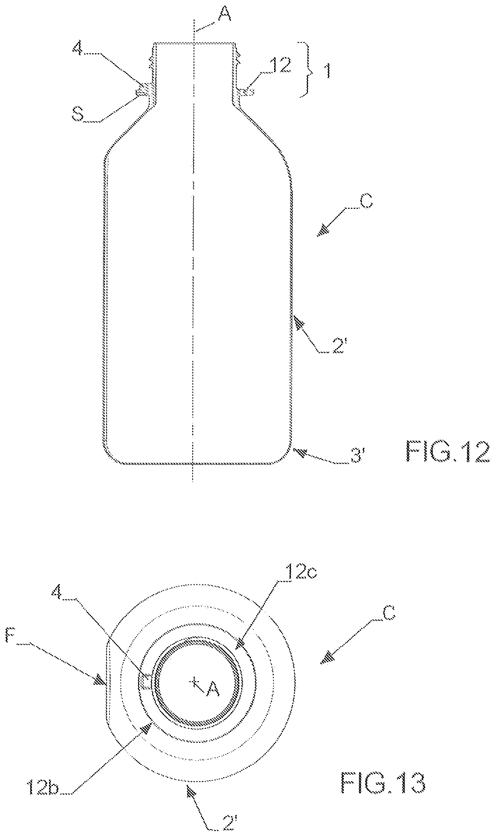

This preform P is an intermediary product that is subsequently biaxially stretched in a mould in a standard way, in order to form a final container of higher volume. This biaxial stretching can be for example performed by using the well-known stretch-blow molding technique or the well-know technique of isobaric blowing (as shown on the schematic drawing of figures 10). When the preform P is biaxially stretched, the neck finish 1 is not modified, and only the tubular body 2 and bottom end 3 of the preform P are biaxially stretched. The final container C (figures12 and 13) and the preform P have thus the same neck finish 1.

In reference to figures 6 and 7, the recessed orientation slot S does not break through the neck support ring 12 and is thus not visible on the top view of figure 9. This recessed orientation slot S is used for achieving an angular orientation of the preform P or container C around their longitudinal axis A, for example by using a movable cam 5 that can be actuated in a radial direction D, in order to be inserted in the slot S under the neck support ring 12. This angular orientation of the preform P or container C can be also performed by sensing the recess orientation slot S with sensors.

The angular orientation of the preform P is useful for example for obtaining a correct orientation of the neck finish 1 of the preform P in the blowing mold or for obtaining a correct orientation of the container C during the labelling or marking process of the container.

As shown also on the particular embodiment of figure 13, the shape of the container body 2' is asymmetric, and included notably a flat wall F. The correct angular orientation of the preform P in the blowing mould enables to correctly orient the stop ledge 4 with respect to this asymmetrical body 2', and thereby enables to obtain a correct orientation of any closure device or spraying nozzle or dispensing nozzle that is threaded or snapped onto the neck finish in abutment against the stop ledge 4.

The use of a recessed slot in the bottom side 12a of the neck support ring involves several advantages.

A first main advantage is a reduction of diameter of the neck support ring 12 (see e.g. figure 9 versus figure 3 of the prior art). Thanks to this diameter reduction, the preform P can be injected more easily and thinner neck support ring 12 can also be practised. The cooling time and thereby the injection cycle time are reduced. Lower weight preforms can be injected. The number of cavities in a standard injection tool can be increased.

An additional advantage is a better accessibility to the orientation slot S, which is still accessible for example when the neck finish 1 is closed with a device like the isobaric blowing nozzle 6 of figure 10.

In reference to figures 8 and 9, the stop ledge 4 is angularly aligned with the recessed orientation slot S. In another variant, the angular position of the stop ledge 4 could be different and not aligned with the position of the slot S.

In this particular embodiment, the stop ledge 4 is extending radially from the cylindrical wall 10 of the neck finish 1 without reaching the outer edge 12b of the neck support ring 12, and the portion of the top side 12c of the neck support ring 12 between said stop ledge 4 and the neck support ring outer edge 12b forms an annular continuous seal 12d that extends on the whole periphery of the neck support ring top side 12c. This annular continuous seal 12d is depicted on figure 9 by an annular hachured zone at the edge of the neck support ring 12.

As better shown on figure 10, when an isobaric blowing nozzle 6 is adapted onto the neck finish 1 of the preform P, this annular continuous seal 12d can be advantageously used for sealing off the blowing pressure of the nozzle 6. It has to be noted that on figure 10, the blowing mold into which the preform P is positioned, prior to the adaptation of the blowing nozzle 6, is not represented.

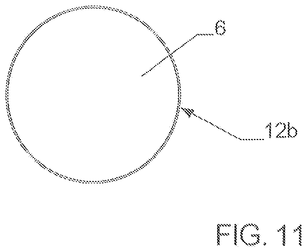

The invention is not limited to the particular variants of figures 6 to 13. The shape of the recessed orientation slot S or the shape of the stop ledge 4 can be different. In another variant, the neck finish 1 can comprise only a recessed orientation slot S and no stop ledge 4. The shape of the container body 2' is not limited to the particular asymmetrical shape of figure 13, but the container can have any symmetrical or asymmetrical shape. The preform P is not necessarily blow molded into a container C by using an isobaric blowing process, but a standard stretch blow molding process with a blowing stretch rod can be also practiced.

Within the scope of the invention the recessed orientation slot S is not only adapted to cooperate with an orientation cam 5 or the like, but can also be used for automatically detecting the orientation of the preform or container. For example, in a process of angularly orienting a preform or container of the invention, the orientation of the preform or container can be automatically detected by automatically detecting the recessed orientation slot S with one or several sensors.

## Claims

1. A plastic preform (P) or plastic container (C) comprising a neck finish (1), a closed bottom end (3; 3') and a main body (2 ; 2') extending between said closed bottom end and said neck finish, said neck finish being terminated by an opening (11) and comprising a neck support ring (12), **characterized in that** the neck support ring (12) is free of a recess that reaches the top side (12c) of the neck support ring and **in that** the bottom side (12a) of the neck support ring comprises a recessed orientation slot (S) that extends radially from the neck support ring outer edge (12b) and does not break through the neck support ring and is thus not visible on a top view of the plastic preform.

2. The plastic preform or container of claim 1, further comprising a stop ledge (4) on the top side (12c) of the neck support ring.

3. The plastic preform or container of claim 2, wherein the portion of the neck support ring top side (12c) between said stop ledge (4) and the neck support ring outer edge (12b) forms an annular continuous seal (12d).

4. The plastic preform or container of claim 2 or 3, wherein the neck finish (1) comprises a cylindrical wall (10) and the stop ledge (4) is extending radially from said cylindrical wall (10).

5. The plastic preform or container of claim 4, wherein the stop ledge (4) is extending radially from said cylindrical wall (10) without reaching the outer edge (12b) of the neck support ring (12).

6. The plastic preform or container of any one of claims 1 to 5, wherein the stop ledge (4) is angularly aligned with the recessed orientation slot (S).

7. The plastic container of any one of claims 1 to 6 wherein the body (2') of the container is asymmetrical.

8. A process of manufacturing a rigid container, wherein a preform (P) according to any one of claims 1 to 7 is biaxially stretched in blowing mold in order to form a blow molded container (C).

9. The process of claim 8, wherein the blowing of the preform (P) is performed by using a blowing nozzle (6) that is adapted onto the neck finish (1) of the preform (P) in such a way to make a continuous annular seal with the top side (12c) of the neck support ring (12) for sealing off the blowing pressure.

10. A process of angularly orienting a preform (P) or container of any one of claims 1 to 6, wherein a movable cam (5) is inserted into the recessed orientation slot (S) of the preform or container.

11. A process of detecting the orientation of a preform or a container of any one of claims 1 to 6, wherein the recessed orientation slot (S) of the preform or container is automatically detected by one or several sensors.

## Patentansprüche

1. Kunststoffvorformling (P) oder Kunststoffbehälter (C), umfassend ein Halsteil (1), ein geschlossenes unteres Ende (3; 3') und einen zwischen dem geschlossenen unteren Ende und dem Halsteil verlaufenden Hauptkörper (2; 2'), wobei der Halsteil mit einer Öffnung (11) abschließt und einen Halstragring (12) aufweist,
**dadurch gekennzeichnet, dass**
der Halstragring (12) frei von einer Ausnehmung welche die Oberseite (12c) des Halstragrings (12) erreicht, ist und dassdie untere Seite (12a) des Halstragrings einen ausgesparten Orientierungsschlitz (S) aufweist, der sich radial von der Außenkante (12b) des Halstragrings erstreckt und den Halstragring nicht durchstößt und somit in einer Draufsicht des Kunststoffvorformlings nicht sichtbar ist.

2. Vorformling oder Behälter nach Anspruch 1, weiterhin umfassend eine Anschlagleiste (4) auf der Oberseite (12c) des Halstragrings.

3. Vorformling oder Behälter nach Anspruch 2, wobei der Abschnitt der Halstragring-Oberseite (12c) zwischen der Anschlagleiste (4) und der Halstragring-Außenkante (12b) eine ringförmige durchgehende Dichtung (12d) bildet.

4. Vorformling oder Behälter nach Anspruch 2 oder 3, wobei der Halsteil (1) eine zylindrische Wand (10) aufweist und sich die Anschlagleiste (4) radial von der zylindrischen Wand (10) erstreckt.

5. Vorformling oder Behälter nach Anspruch 4, wobei die Anschlagleiste (4) radial von der zylindrischen Wand (10) verläuft, ohne die Außenkante (12b) des Halstragrings (12) zu erreichen.

6. Vorformling oder Behälter nach einem der Ansprüche 1 bis 5, wobei die Anschlagleiste (4) winklig mit dem ausgesparten Orientierungsschlitz (S) ausgerichtet ist.

7. Vorformling oder Behälter nach einem der Ansprüche 1 bis 6, wobei der Körper (2') des Behälters asymmetrisch ist.

8. Verfahren zur Herstellung eines starren Behälters, bei dem ein Vorformling nach einem der Ansprüche 1 bis 7 in einem Blaswerkzeug biaxial gereckt wird, um einen blasgeformten Behälter (C) zu bilden.

9. Verfahren nach Anspruch 8, wobei das Blasen des Vorformlings (P) unter Verwendung einer Blasdüse (6) durchgeführt wird, die derart auf den Halsteil (1) des Vorformlings (P) angepasst ist, dass eine kontinuierliche ringförmige Dichtung mit der Oberseite (12c) des Halstragrings (12) gebildet wird, damit der Blasdruck abgesperrt/abgedichtet wird.

10. Verfahren zum winkligen Ausrichten eines Vorformlings (P) oder eines Behälters nach einem der Ansprüche 1 bis 6, bei dem eine bewegliche Nocke (5) in den ausgesparten Orientierungsschlitz (S) des Vorformlings oder des Behälters eingeführt wird.

11. Verfahren zum Erfassen der Orientierung eines Vorformlings oder eines Behälters nach einem der Ansprüche 1 bis 6, bei dem der ausgesparte Orientierungsschlitz (S) des Vorformlings oder des Behälters durch einen oder mehrere Sensoren automatisch erfasst wird.

## Revendications

1. Préforme en plastique (P) ou récipient en plastique (C), comprenant une finition de goulot (1), une extrémité inférieure fermée (3; 3') et un corps principal (2; 2') qui s'étend entre ladite extrémité inférieure fermée et ladite finition de goulot, ladite finition de goulot étant terminée par une ouverture (11) et comprenant un anneau de support de goulot (12), caractérisé(e) en ce que l'anneau de support de goulot (12) est libre d'un évidement qui atteint le côté supérieur (12c) de l'anneau de support de goulot (12) et en ce que le côté inférieur (12a) de l'anneau de support de goulot comporte une rainure d'orientation évidée (S) qui s'étend radialement à partir du bord extérieur (12b) de l'anneau de support de goulot et ne transperce pas l'anneau de support de goulot et n'est donc pas visible sur une vue du dessus de la préforme en plastique.

2. Préforme ou récipient en plastique selon la revendication 1, comprenant en outre un rebord d'arrêt (4) sur le côté supérieur (12c) de l'anneau de support de goulot.

3. Préforme ou récipient en plastique selon la revendication 2, dans lequel la partie du côté supérieur (12c) de l'anneau de support de goulot entre ledit rebord d'arrêt (4) et le bord extérieur (12b) de l'anneau de support de goulot forme un joint continu annulaire (12d).

4. Préforme ou récipient en plastique selon la revendication 2 ou 3, dans lequel la finition de goulot (1) comprend une paroi cylindrique (10), et le rebord d'arrêt (4) s'étend radialement à partir de ladite paroi cylindrique (10).

5. Préforme ou récipient en plastique selon la revendication 4, dans lequel le rebord d'arrêt (4) s'étend radialement à partir de ladite paroi cylindrique (10) sans atteindre le bord extérieur (12b) de l'anneau de support de goulot (12).

6. Préforme ou récipient en plastique selon l'une quelconque des revendications 1 à 5, dans lequel le rebord d'arrêt (4) est aligné angulairement avec la rainure d'orientation évidée (S).

7. Récipient en plastique selon l'une quelconque des revendications 1 à 6, dans lequel le corps (2') du récipient est asymétrique.

8. Procédé de fabrication d'un récipient rigide, dans lequel une préforme (P) selon l'une quelconque des revendications 1 à 7 est étirée bi-axialement dans un moule de soufflage dans le but de former un récipient moulé par soufflage (C).

9. Procédé selon la revendication 8, dans lequel le soufflage de la préforme (P) est effectué en utilisant une buse de soufflage (6) qui est adaptée sur la finition de goulot (1) de la préforme (P) de manière à former un joint annulaire continu avec le côté supérieur (12c) de l'anneau de support de goulot (12) afin de séparer hermétiquement la pression de soufflage.

10. Procédé pour orienter angulairement une préforme (P) ou d'un récipient selon l'une quelconque des revendications 1 à 6, dans lequel une came mobile (5) est insérée dans la rainure d'orientation évidée (S) de la préforme ou du récipient.

11. Procédé de détection de l'orientation d'une préforme ou d'un récipient selon l'une quelconque des revendications 1 à 6, dans lequel la rainure d'orientation évidée (S) de la préforme ou du récipient est détectée automatiquement par un ou plusieurs capteur(s).
